# FASCICULE DE BREVET EUROPEEN

(11) **EP 1 553 661 B1**
(45) Date de publication et mention de la délivrance du brevet: **09.04.2008**
(21) Numéro de dépôt: 05100056.0
(22) Date de dépôt: 06.01.2005
(51) Int. Cl.: H01R 4/34

(54) **Dispositif de connexion électrique destiné à réaliser un point de métallisation, support muni d'un tel dispositif de connexion, et aéronef équipé d'un tel support**
Elektrische Anschlussvorrichtung zur Schaffung eines Metallisierungspunkts, Träger mit einer solchen Anschlussvorrichtung und mit einem solchen Träger augerüstetes Flugzeug
Electrical connecting device for realising a metallisation point, support having such a connecting device and airplane equipped with such a support

(30) Priorité: 08.01.2004 FR 0450045
(43) Date de publication de la demande: 13.07.2005
(73) Titulaire: AIRBUS France, 31060 Toulouse (FR)
(72) Inventeur: Girinon, Olivier, 42530, SAINT GENEST LERPT (FR)
(74) Mandataire: Poulin, Gérard

(56) Documents cités:
- EP-A- 0 891 007
- EP-A- 0 971 440
- FR-A- 2 265 194

## Description

La présente invention se rapporte au domaine technique des connexions électriques entre éléments conducteurs.

Plus particulièrement, elle vise un dispositif de connexion électrique, agencé sur un support électriquement conducteur, de manière à réaliser sur ce support un point de contact électrique, encore appelé point de métallisation. De tels points de métallisation sont utilisés pour connecter le support à un organe électriquement conducteur. Ce dernier peut être par exemple une tresse, munie d'une cosse. La connexion électrique entre le support et la tresse se fait alors en fixant la cosse de la tresse sur le dispositif de connexion du support.

Une telle connexion peut être utilisée pour assurer l'équipotentialité du support avec d'autres éléments électriquement conducteurs, par exemple par mise à la masse électrique, afin d'éviter une accumulation de charges électrostatiques sur ce support, qui pourraient provoquer des décharges électrostatiques soudaines, susceptibles d'engendrer un incendie ou une explosion, ce que l'on souhaite éviter.

Une telle connexion peut également être utilisée pour assurer une protection contre la foudre, par exemple si l'on souhaite effectuer la faradisation d'une enceinte dont une partie au moins est délimitée par un tel support.

Une telle connexion peut encore être utilisée pour permettre des retours de courants fonctionnels, par exemple le retour, par l'intermédiaire du support, du 0 Volt d'un équipement électrique installé sur un véhicule automobile.

L'invention se rapporte également à un support électriquement conducteur, muni d'un ou plusieurs dispositifs de connexion qui réalisent sur celui-ci autant de points de métallisation.

Elle vise encore un aéronef équipé d'un tel support. A titre d'exemple, un avion tel qu'un Airbus A340 nécessite la présence de plus de 5000 points de métallisation pour la connexion de systèmes électriques, ainsi que de nombreux autres points de métallisation destinés à assurer l'équipotentialité d'équipements, notamment d'équipements hydrauliques ou de stockage, ou de transport de carburant.

### ETAT DE LA TECHNIQUE ANTERIEURE

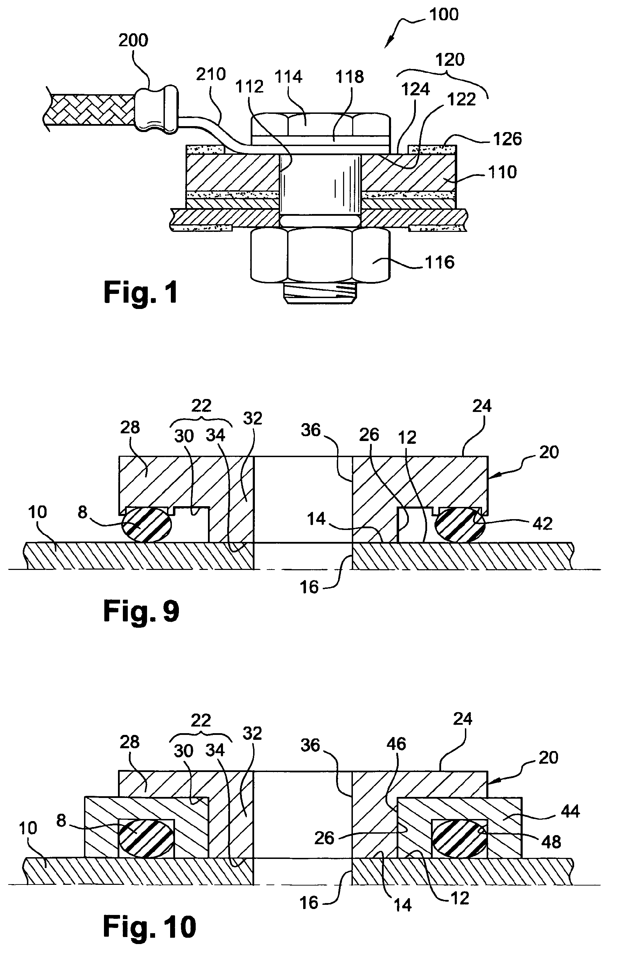

Un point de métallisation connu est illustré à la figure 1, par la connexion électrique d'un support 110 électriquement conducteur à une tresse 200 électriquement conductrice munie d'une cosse 210.

Le support 110 se présente sous la forme d'une plaque. La cosse 210 est fixée à un dispositif de connexion 100 qui se présente sous la forme d'un assemblage mécanique constitué d'une vis 114, d'un écrou 116, et d'une rondelle 118. La vis 114 est introduite dans un trou traversant 112 ménagé dans le support 110, et maintenue à l'aide de l'écrou 116. La rondelle conductrice 118 est interposée entre la tête de la vis 114 et la surface en regard du support 110. La cosse 210 se présente sous la forme d'un anneau serré entre la tête de la vis 114 et la rondelle conductrice 118.

Le point de métallisation est constitué de la combinaison du dispositif de connexion et de la partie correspondante du support, c'est-à-dire des zones de surface entourant chacun des orifices du trou traversant 112.

La mise en oeuvre de la connexion électrique entre le support 110 et le dispositif de connexion 100 comporte une étape de décapage de la surface du support autour de chaque orifice du trou traversant 112. Ce décapage consiste à enlever toute matière qui pourrait altérer la conductivité de ladite surface, comme par exemple de la peinture ou de la matière corrodée. Dans certains cas, la nature du matériau constitutif du support 110, ou de ses surfaces libres, nécessite qu'une couche de matériau neutre et isolant soit appliquée sur la zone décapée 120, afin de boucher les micro-espaces qui peuvent exister entre la surface mise à nu de la zone décapée 120 et la pièce (cosse 210 ou écrou 116) qui vient en contact avec celle-ci. C'est le cas notamment lorsque le support 110 est réalisé en aluminium.

Dans ce mode de réalisation de la technique antérieure, la zone de connexion décapée 120 est plus étendue que l'assemblage mécanique 114, 116, 118, afin de garantir une bonne performance de la connexion électrique entre ledit support 110 et ledit assemblage mécanique 114, 116, 118. Il existe donc une partie 122 de la zone décapée 120 qui est recouverte par la cosse 210, la vis 114, l'écrou 116, ou la rondelle 118, et une partie 124 de cette même zone décapée 120 qui n'est pas recouverte par l'un de ces éléments. Cette partie non recouverte 124 n'est pas protégée contre la corrosion. La mise en oeuvre d'un point de métallisation conformément à la technique antérieure nécessite donc de revêtir par une couche de vernis protecteur 126 cette partie non recouverte 124, après l'avoir soumise à un traitement de dégraissage.

Cette solution de la technique antérieure présente un certain nombre d'inconvénients.

Un premier inconvénient réside dans le fait que le vernis protecteur doit tout d'abord être préparé avant d'être appliqué, à l'aide d'un pinceau. Le temps de préparation et le temps d'application du vernis sont relativement longs, ce qui induit des coûts élevés de mise en oeuvre.

Un deuxième inconvénient réside dans le fait que le vernis protecteur est généralement isolant, ce qui rend difficile les contrôles de la connexion électrique postérieurement à l'application du vernis.

Un troisième inconvénient réside dans le fait que le vernis risque de s'écailler au cours du temps, ce qui altère la protection de la partie non recouverte 124 contre la corrosion, et nécessite des opérations supplémentaires de maintenance. Il est alors nécessaire de démonter l'ensemble mécanique constitué par la cosse 210, la vis 114, l'écrou 116, et la rondelle 118 et de décaper à nouveau la surface entourant l'orifice du trou traversant 112, avant de remonter l'ensemble mécanique 210, 114, 116, 118. Ces opérations de démontage, décapage, remontage nécessitent une immobilisation de la structure sur laquelle est installée le support 110. Les coûts d'immobilisation sont important, en particulier lorsque ladite structure est un aéronef. De plus il faut veiller à respecter un laps de temps bref entre le décapage et le remontage, afin d'éviter un nouveau risque de corrosion de la partie non recouverte 124. En pratique pour réduire les coûts d'immobilisation, on a tendance à effectuer l'opération de décapage en s'affranchissant des opérations de démontage et de remontage. Mais alors surviennent d'autres inconvénients, comme la difficulté d'accès à la surface non recouverte avec l'outil de décapage, et la dispersion de poussières de décapage dans la structure.

Dans le domaine ferroviaire, un dispositif de connexion selon le préambule de la revendication 1 a été divulgué dans le document EP 0 891 007.

### EXPOSÉ DE L'INVENTION

L'invention se rapporte à un dispositif de connexion, destiné à réaliser un point de métallisation sur un support, qui ne rencontre pas les inconvénients inhérents au dispositif de connexion de la technique antérieure, ci-dessus décrit.

Selon un premier aspect, l'invention concerne un dispositif de connexion électrique destiné à réaliser un point de métallisation sur un support électriquement conducteur.

Selon un mode de réalisation du premier aspect de l'invention, le dispositif de connexion électrique, destiné à réaliser un point de métallisation sur un support, ledit support ayant deux faces de support électriquement conductrices sensiblement opposées l'une à l'autre, et ledit support étant traversé d'un trou de support qui débouche sur chacune desdites faces de support, comporte :
- deux pièces de contact, électriquement conductrices, ayant chacune une partie périphérique et une partie centrale, et ayant chacune une première et une seconde faces sensiblement opposées, chaque première face ayant une face périphérique correspondant à la partie périphérique et une face centrale correspondant à la partie centrale, la face périphérique et la face centrale étant délimitées par un épaulement, et ladite face centrale étant sensiblement plane de manière à venir, en service, en contact sensiblement plan avec une face du support,
- deux joints d'étanchéité respectivement destinés, en service, à être comprimés entre la face périphérique de l'une ou l'autre des pièces de contact et l'une ou l'autre des faces du support,
- des moyens de fixation du dispositif sur le support, lesdits moyens de fixation étant aptes à maintenir un contact électrique entre lesdites faces de support conductrices et lesdites pièces de contact. Les moyens de fixation comportent :

- un trou de l'une des deux pièces de contact, traversant celle-ci selon une direction axiale sensiblement centrée par rapport à sa partie centrale et par rapport à sa partie périphérique,
- un trou de l'autre des pièces de contact, traversant celle-ci selon une direction axiale sensiblement centrée par rapport à sa partie centrale et par rapport à sa partie périphérique,
- des moyens de fixation traversants ayant une direction axiale, destinés, en service, à traverser successivement le trou de l'une des pièces de contact, puis le trou de support, puis le trou de l'autre pièce de contact.

Lesdits moyens de fixation traversants comportent un ensemble vis/écrou, la vis ayant une tige de vis destinée, en service, à traverser le trou de l'une des pièces de contact puis le trou de support, puis le trou de l'autre pièce de contact, et la vis ayant une tête de vis destinée, en service, à s'appuyer contre la seconde face de l'une des pièces de contact, et l'écrou étant destiné, en service, à s'appuyer contre la seconde face de l'autre des pièces de contact.

Lesdits moyens de fixation traversants comportent deux pièces de serrage, chaque pièce de serrage comportant une partie cylindrique se terminant à une extrémité par une collerette d'extrémité et munie à l'autre extrémité de moyens de verrouillage, les moyens de verrouillage des deux pièces de serrage étant aptes à coopérer pour verrouiller ensemble lesdites deux pièces de serrage, et chaque collerette d'extrémité étant destinée, en service, à s'appuyer contre la seconde face de l'une ou l'autre des pièces de contact.

De préférence, la (ou les) pièce(s) de contact est (sont) réalisée(s) en métal électriquement conducteur. De manière encore plus préférée, ce métal est de l'acier, et la surface de la (des) pièce(s) de contact est traitée contre la corrosion.

De préférence, le(s) joint(s) d'étanchéité est(sont) un(des) joint(s) torique(s).

De préférence, le dispositif de connexion électrique, selon le premier ou le deuxième mode de réalisation, comporte, en outre, des moyens de retenue du(des) joint(s) d'étanchéité.

Un avantage du dispositif de connexion selon l'invention réside dans le fait que (i) le contact électrique s'effectue entre chaque zone de contact, décapée, de la (des) face(s) conductrice (s) du support et la pièce de contact correspondante, qui est électriquement conductrice, (ii) chaque zone de contact est maintenue étanche à l'air, et donc à l'abri d'une corrosion, grâce à la présence d'un joint d'étanchéité, (iii) les moyens de fixation du dispositif de connexion sur le support contribuent d'une part à assurer le contact électrique entre la pièce de contact et la face de support et d'autre part à comprimer le joint d'étanchéité entre ladite pièce de contact et ladite face de support.

Selon un deuxième aspect, l'invention concerne un support électriquement conducteur muni d'au moins un dispositif de connexion selon le premier aspect de l'invention, de manière à réaliser au moins un point de métallisation sur ledit support.

Enfin, selon un troisième aspect, l'invention concerne un aéronef équipé d'au moins un support selon le deuxième aspect de l'invention.

### BRÈVE DESCRIPTION DES DESSINS

L'invention sera mieux comprise à la lecture de la description détaillée qui va suivre de modes de réalisation particuliers de l'invention, fournis à titre illustratif et nullement limitatif, en référence aux dessins annexés, dans lesquels :
- la figure 1, déjà décrite, illustre, en coupe longitudinale, un point de métallisation conforme à la technique antérieure ;
- la figure 2 illustre, en coupe longitudinale et de manière générale, dispositif de connexion ;
- la figure 3 illustre, en coupe longitudinale, des moyens de fixation du précédent dispositif de connexion ;
- la figure 4 illustre, en coupe longitudinale, des moyens de fixation d'un autre dispositif de connexion ;
- la figure 5 illustre, en coupe longitudinale, des moyens de fixation d'un autre dispositif de connexion ; ,
- la figure 6 illustre, en coupe longitudinale, un autre dispositif de connexion ;
- la figure 7 illustre, en coupe longitudinale, un mode de réalisation selon l'invention ;
- la figure 8 illustre, en perspective semi-éclatée, un dispositif de connexion conforme à l'invention;
- la figure 9 illustre, en coupe longitudinale, un exemple de réalisation des moyens de retenue du joint d'étanchéité, conformément à l'invention ; et
- la figure 10 illustre, en coupe longitudinale, un autre exemple de réalisation des moyens de retenue du joint d'étanchéité, conformément à l'invention.

### EXPOSÉ DÉTAILLÉ DE MODES DE RÉALISATION PARTICULIERS

Un dispositif de connexion 2 dont certaines variantes selon l'invention va maintenant être décrit en référence aux figures, en considérant successivement :
- le premier mode de réalisation du dispositif de connexion 2, plus particulièrement adapté à un support 10 ayant au moins une face de support 12 électriquement conductrice, et
- le second mode de réalisation du dispositif de connexion 2, plus particulièrement adapté à un support 10 ayant deux faces de support 12, électriquement conductrices et sensiblement opposées l'une à l'autre.

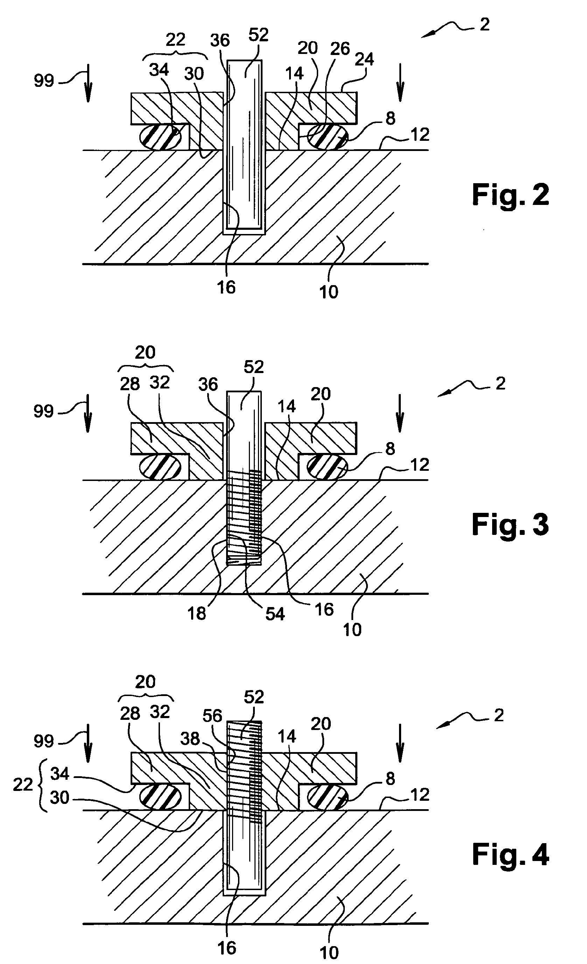

Selon le premier mode de réalisation non conforme à l'invention illustré aux figures 2 à 5, le dispositif de connexion 2 comporte une pièce de contact 20, un joint d'étanchéité 8, et des moyens de fixation 18, 36, 38, 52, 54, 56, 58, 60, 62, 64 du dispositif de connexion 2 sur le support 10.

La pièce de contact 20 est une pièce conductrice destinée à venir en contact avec la zone de contact 14 de la face de support conductrice 12. Elle est de préférence réalisée en métal conducteur, comme par exemple en un acier dont la surface est traitée contre la corrosion. Elle comporte une première face 22 et une seconde face 24 sensiblement opposées l'une à l'autre. La première face 22 comporte une face périphérique 30 et une face centrale 34, qui sont délimitées par un épaulement 26 et qui correspondent respectivement à une partie périphérique 28 et à une partie centrale 32 de la pièce de contact 20. La seconde face 24 de la pièce de contact 20 est de préférence sensiblement plane.

Le joint d'étanchéité 8 est destiné à maintenir étanche à l'air la zone de contact 14 de la face conductrice 12 pour éviter qu'elle ne se corrode. De préférence, le joint d'étanchéité 8 est un joint torique. De préférence, il est réalisé en un élastomère compatible avec les conditions d'environnement (température, pression, etc.) généralement rencontrées dans un aéronef.

Les moyens de fixation 18, 36, 38, 52, 54, 56, 58, 60, 62, 64, 66 du dispositif de connexion 2 sur le support 10 sont aptes à maintenir un contact électrique entre la face de support conductrice 12 et la pièce de contact 20.

Le premier mode de réalisation du dispositif de connexion électrique est particulièrement adapté à un support 10 comportant un trou de support 16 débouchant au moins sur sa face conductrice 12. Selon ce premier mode de réalisation, les moyens de fixation 18, 36, 38, 52, 54, 56, 58, 60, 62, 64 comportent :
- un trou 36 de la pièce de contact 20, traversant celle-ci selon une direction axiale et sensiblement centrée par rapport à sa partie périphérique 28 et par rapport à sa partie centrale 32, et
- une tige 52 destinée, en service à traverser le trou de pièce de contact 36 et à être introduite dans le trou de support 16.

Selon une première variante du premier mode de réalisation, illustrée à la figure 3, les moyens de fixation peuvent comporter un premier filetage 54 de la tige 52 et un filetage 18 du trou de support 16, qui coopèrent pour fixer la tige 52 au support 10.

Selon une deuxième variante du premier mode de réalisation, illustrée à la figure 4, les moyens de fixation peuvent comporter un deuxième filetage 56 de la tige 52 et un filetage 38 du trou de pièce de contact 36, qui coopèrent pour fixer la tige 52 à la pièce de contact 20, celle-ci étant fixée au support 10 par d'autres moyens de fixation.

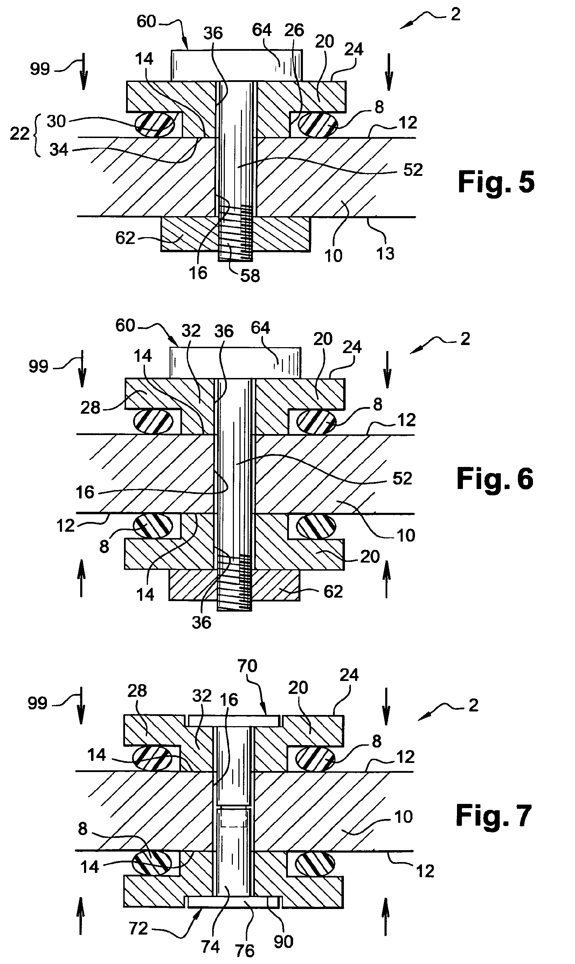

Selon une troisième variante du premier mode de réalisation, illustrée à la figure 5, particulièrement adaptée à un support comportant un trou traversant débouchant sur la face conductrice 12 du support 10 et sur une seconde face 13 du support 10, conductrice ou non-conductrice, lesdits moyens de fixation 18, 36, 38, 52, 54, 56, 58, 60, 62, 64 comportent, en outre :
- un écrou 62, destiné, en service, à être placé du côté de la seconde face 13 du support 10,
- un troisième filetage 58 de la tige 52, qui coopère avec ledit écrou 62,
- une tête de vis 64, qui prolonge ladite tige 52 de manière à former une vis 60, ladite tête de vis 64 étant destinée, en service, à s'appuyer contre la seconde face 24 de la pièce de contact 20.

Les trois variantes peuvent également être combinées entre elles, deux par deux ou toutes les trois ensemble. Le premier filetage 54, le deuxième filetage 56 et le troisième filetage 58 de la tige 52 peuvent être identiques ou différents les uns des autres.

Selon le second mode de réalisation illustré aux figures 6 à 8, le dispositif de connexion 2 comporte deux pièces de contact 20, deux joints d'étanchéité 8, et des moyens de fixation 36, 60, 62, 64, 66, 70, 72, 76, 78, 80, 82 du dispositif de connexion 2 sur le support 10. Il est particulièrement adapté à un support 10 comportant deux faces 12 électriquement conductrices et sensiblement opposées l'une à l'autre, et étant traversé d'un trou de support 16 qui débouche sur chacune des deux faces conductrices 12.

Les deux pièces de contact 20 sont de préférence semblables entre elles et semblables à la pièce de contact 20 du premier mode de réalisation du dispositif de connexion 2.

Les joints d'étanchéité 8 sont de préférence semblables entre eux et semblables au joint d'étanchéité 8 du premier mode de réalisation.

Les moyens de fixation 36, 60, 62, 64, 66, 70, 72, 76, 78, 80, 82 du dispositif de connexion 2 sur le support 10 sont également aptes à maintenir un contact électrique entre chaque face conductrice 12 du support 10 et la pièce de contact 20 correspondante. Ils comportent :
- un trou 36 de l'une des deux pièces de contact 20, traversant celle-ci selon une direction axiale et sensiblement centrée par rapport à sa partie périphérique 28 et par rapport à sa partie centrale 32,
- un trou 36 de l'autre des deux pièces de contact 20, traversant celle-ci selon une direction axiale et sensiblement centrée par rapport à sa partie périphérique 28 et par rapport à sa partie centrale 32,
- des moyens de fixation traversants 60, 62, 70, 72 ayant une direction axiale et destinés, en service, à traverser successivement le trou 36 de l'une des pièces de contact 20, puis le trou de support 16, puis le trou 36 de l'autre pièce de contact 20.

Selon une première variante du second mode de réalisation illustrée à la figure 6, les moyens de fixation traversants 60, 62, 70, 72 comportent un ensemble vis/écrou 60, 62. La tige 52 de la vis 60 est destinée, en service, à traverser le trou 36 de l'une des pièces de contact 20, puis le trou 16 du support 10, puis le trou 36 de l'autre pièce de contact 20. La tête 64 de la vis 60 est destinée, en service, à s'appuyer contre la seconde face 24 de l'une des pièces de contact 20 tandis que l'écrou 62 est destiné, en service, à s'appuyer contre la seconde face 24 de l'autre des pièces de contact 20.

Selon une deuxième variante du second mode et conforme à l'invention de réalisation illustrée à la figure 7, les moyens de fixation traversants comportent deux pièces de serrage 70, 72. Chaque pièce de serrage 70, 72 comporte une partie cylindrique 74 se terminant à une extrémité par une collerette d'extrémité 76 s'étendant vers l'extérieur, et munie à l'autre extrémité de moyens de verrouillage 78, 80. Les moyens de verrouillage 78, 80 des deux pièces de serrage 70, 72 sont aptes à coopérer pour verrouiller ensemble lesdites deux pièces de serrage 70, 72. Les collerettes d'extrémité 76 sont destinées, en service, à s'appuyer contre les secondes faces 24 respectives des pièces de contact 20.

Les moyens de verrouillage 78, 80 comportent des parties en saillies 78 de l'une des pièces de serrage 70 et des parties en creux 80 de l'autre pièce de serrage 72. Les parties en saillie 78 et les parties en creux 80 sont ménagées, respectivement, vers l'extrémité de la partie cylindrique 74 qui est opposée à la collerette d'extrémité 76. Elles sont destinées, en service, à être mutuellement mises en prise sous l'action d'une compression axiale exercée sur les deux pièces de serrage 70, 72 de manière à s'emboîter l'une avec l'autre. En service, la collerette d'extrémité 76 de l'une des pièces de serrage 70, 72 est destinée à s'appuyer contre la seconde face 24 de l'une des pièces de contact 20, et la collerette d'extrémité 76 de l'autre des pièces de serrage 70, 72 est destinée à s'appuyer contre la seconde face 24 de l'autre pièce de contact 20.

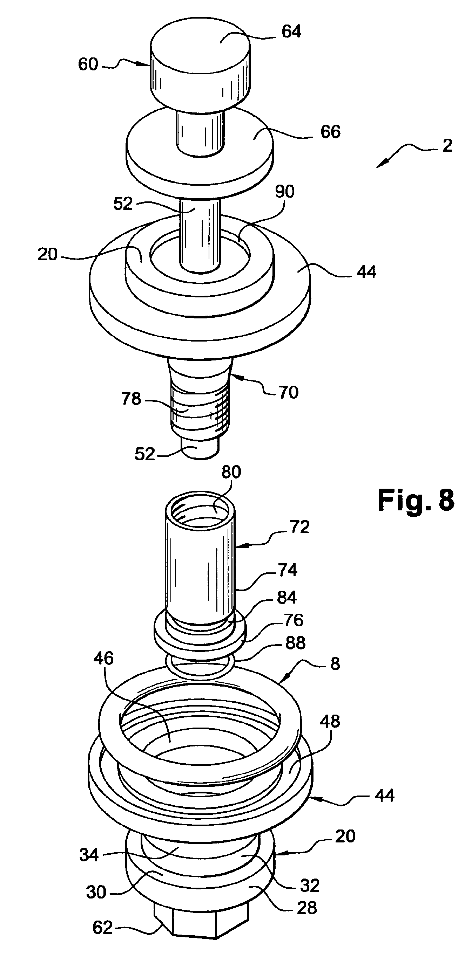

Selon une troisième variante du second mode de réalisation illustré à la figure 8 conforme à l'invention, les parties cylindriques 74 des pièces de serrage 70, 72 sont axialement creuses et les moyens de fixation traversants 60, 62, 70, 72 comportent, en outre, un ensemble vis/écrou 60, 62. En service, la tige 52 de la vis 60 traverse l'une puis l'autre des pièces de serrage 70, 72, et la tête 64 de vis 60 s'appuie contre la collerette d'extrémité 76 de l'une des deux pièces de serrage 70, 72, tandis que l'écrou 62 s'appuie contre la collerette d'extrémité 76 de l'autre des pièces de serrage 70, 72.

De préférence, selon la deuxième variante et/ou la troisième variante du second mode de réalisation, la partie cylindrique 74 de chaque pièce de serrage 70, 72 comporte une rainure annulaire 84 agencée circonférentiellement sur sa face extérieure et à proximité de sa collerette d'extrémité 76 (voir figure 8). Le dispositif de connexion 2 comporte en outre deux organes annulaires d'étanchéité 88, chaque organe annulaire d'étanchéité 88 étant destiné, en service, à être inséré dans une desdites rainures annulaires 84. De préférence, les organes annulaires d'étanchéité 88 sont des joints toriques.

Selon la deuxième et/ou la troisième variante de réalisation, la seconde face 24 de la pièce de serrage 20 comporte de préférence un évidement 90 agencé de manière sensiblement centrale et destiné à loger au moins en partie la collerette d'extrémité 76 de la pièce de serrage 70, 72 qui s'appuie sur ladite seconde face 24 (voir figure 8).

Selon la deuxième variante du second mode de réalisation, les pièces de serrage 70, 72 sont réalisées en un matériau conducteur afin d'assurer le contact électrique du point de métallisation, par exemple en métal comme un acier dont la surface peut être traitée contre la corrosion.

Selon la troisième variante du second mode de réalisation, le contact électrique est réalisé par l'ensemble vis/écrou 60, 62. Les pièces de serrage 70, 72 peuvent dans ce cas être réalisées en un matériau non-conducteur, par exemple en matière plastique, ce qui permet de réduire les coûts de fabrication, lorsque les pièces sont réalisées en quantité importante.

De manière commune aux premier et deuxième modes de réalisation, lorsque les moyens de fixation comportent un ensemble vis/écrou 60, 62, celui-ci peut être accompagné d'une rondelle de serrage 66 placée du côté de la tête de la vis 60, et/ou d'une rondelle de serrage 66 placée du côté de l'écrou 62. Une telle rondelle de serrage 66 est illustrée à la figure 8.

De manière commune au premier et au second modes de réalisation, le dispositif de connexion 2 comporte des moyens de retenue 42, 44, 48 de chaque joint d'étanchéité 8.

Selon une première variante de réalisation illustrée à la figure 9, les moyens de retenue 42, 44, 48 de chaque joint d'étanchéité 8 comportent une gorge annulaire 42 ménagée sur la face périphérique 30 de la pièce de contact 20 de manière à se trouver, en service, en regard de la face de support 12 correspondante. Lorsque la pièce de contact 20 est fixée sur le support 10 sous l'action des moyens de fixation, le joint d'étanchéité 8 se trouve comprimé entre ladite face périphérique 30 et la face de support 12 (flèches 99 aux figures 2 à 7), et retenu par ladite gorge 42.

Selon une deuxième variante de réalisation illustrée à la figure 10, les moyens de retenue 42, 44, 48 de chaque joint d'étanchéité 8 comportent un insert 44, destiné, en service, à être interposé entre la face périphérique 30 de la pièce de contact 20 et la face de support 12. L'insert 44 est traversé d'un trou d'insert 46 qui est dimensionné de manière à recevoir et entourer la partie centrale 32 de la pièce de contact 20, tandis que la face périphérique 30 de la pièce de contact 20 se trouve en appui sur ledit insert 44. Il est muni d'une gorge annulaire 48 ménagée sur une de ses faces destinée à se trouver, en service, en regard de la face de support 12 correspondante. Lorsque la pièce de contact 20 est fixée sur le support 10 sous l'action des moyens de fixation, le joint d'étanchéité 8 se trouve comprimé entre ledit insert 44 et la face de support 12 (flèches 99 aux figures 2 à 7), et retenu par ladite gorge 48. De préférence l'insert 44 est réalisé en une matière non-conductrice, par exemple en matière plastique.

Selon un deuxième aspect, l'invention concerne également un support 10 ayant au moins une face électriquement conductrice 12 muni d'au moins un dispositif de connexion 2 conforme au premier aspect de l'invention, de manière à réaliser un point de métallisation sur le support 10.

Les moyens de fixation 18, 36, 38, 52, 54, 56, 58, 60, 62, 64, 66, 70, 72, 76, 78, 80, 82 du dispositif de connexion 2 au support 10 sont adaptés audit support 10.

Lorsque le support 10 comporte une seule face conductrice 12 et présente un trou de support 16 non traversant, on associe de préférence audit support 10 un dispositif de connexion 2 selon la première ou la deuxième variante du premier mode de réalisation.

Lorsque le support 10 comporte une seule face conductrice 12 et présente un trou de support 16 traversant, on associe de préférence audit support 10 un dispositif de connexion 2 selon la troisième variante du premier mode de réalisation.

Lorsque le support 10 comporte deux faces conductrices 12 sensiblement opposées l'une à l'autre et présente un trou de support 16 traversant, on associe de préférence audit support 10 un dispositif de connexion 2 selon le second mode de réalisation.

La face conductrice 12 du support 10 comporte au moins une zone de contact 14 destinée à être au contact de la face centrale 34 de la pièce de contact 20 correspondante, afin de réaliser un point de métallisation. Cette zone de contact 14, illustrée sur les figures 9 et 10, est décapée de manière à assurer le contact électrique. Lorsque le support 10 présente un ou plusieurs trou(s) de support 16, traversant (s) ou non, ladite zone de contact 14 se situe de préférence autour d'un orifice dudit (desdits) trou(s) de support 16.

Les pièces métalliques sont traitées contre la corrosion, par exemple au moyen d'une protection à base de nickel.

## Revendications

1. Dispositif (2) de connexion électrique, destiné à réaliser un point de métallisation sur un support (10), ledit support (10) ayant deux faces de support (12) électriquement conductrices et sensiblement opposées l'une à l'autre, et ledit support (10) étant traversé d'un trou de support (16) qui débouche sur chacune desdites faces de support (12), comportant :
- deux pièces de contact (20) électriquement conductrices, ayant chacune une partie périphérique (28) et une partie centrale (32), et ayant chacune une première et une seconde faces (22, 24) sensiblement opposées, et
- des moyens de fixation (36, 60, 62, 64, 66, 70, 72, 76, 78, 80, 82) du dispositif (2) sur le support (10), aptes à maintenir un contact électrique entre lesdites faces de support conductrices (12) et lesdites pièces de contact (20),
dans lequel les moyens de fixation comportent :
- un trou (36) de chacune des deux pièces de contact (20), traversant celle-ci selon une direction axiale sensiblement centrée par rapport à sa partie centrale (32) et par rapport à sa partie périphérique (28), et
- des moyens de fixation traversants (60, 62, 70, 72) ayant une direction axiale, destinés, en service, à traverser successivement le trou (36) de l'une des pièces de contact (20), puis le trou de support (16), puis le trou (36) de l'autre pièce de contact (20),
**caractérisée en ce que** :
- chaque première face (22) des pièces de contact (20) comporte une face périphérique (30) correspondant à la partie périphérique (28) et une face centrale (34) correspondant à la partie centrale (32), la face périphérique (30) et la face centrale (34) étant délimitées par un épaulement (26), et ladite face centrale (34) étant sensiblement plane de manière à venir, en service, en contact sensiblement plan avec l'une ou l'autre desdites faces de support (12), et
- le dispositif (2) comporte deux joints d'étanchéité (8) respectivement destinés, en service, à être comprimés entre la face périphérique (30) de l'une ou l'autre des pièces de contact (20) et l'une ou l'autre des faces de support (12), et
- les moyens de fixation traversants (60, 62, 70, 72) comportent deux pièces de serrage (70, 72), chaque pièce de serrage (70, 72) comportant une partie cylindrique (74) se terminant à une extrémité par une collerette d'extrémité (76) et munie à l'autre extrémité de moyens de verrouillage (78, 80), lesdits moyens de verrouillage (78, 80) étant aptes à coopérer pour verrouiller ensemble lesdites deux pièces de serrage (70, 72), et chaque collerette d'extrémité (76) étant destinée, en service, à s'appuyer contre la seconde face (24) de l'une ou l'autre des pièces de contact (20), et
- les parties cylindriques (74) desdites pièces de serrage (70, 72) sont creuses et lesdits moyens de fixation traversants (60, 62, 70, 72) comportent, en outre, un ensemble vis/écrou (60, 62), la vis (60) ayant une tige de vis (52) destinée, en service, à traverser l'une puis l'autre des pièces de serrage (70, 72) et la vis (60) ayant une tête de vis (64) destinée, en service, à s'appuyer contre la collerette d'extrémité (76) de l'une des pièces de serrage (70, 72), et l'écrou (62) étant destiné, en service, à s'appuyer contre la collerette d'extrémité (76) de l'autre des pièces de serrage (70, 72).

2. Dispositif (2) selon la revendication 1, **caractérisé en ce que** les moyens de verrouillage (78, 80) comportent des parties en saillies (78) de l'une des pièces de serrage et des parties en creux (80) de l'autre pièce de serrage, lesdites parties en saillie (78) et lesdites parties en creux (80) étant destinées, en service, à être mutuellement mises en prise.

3. Dispositif (2) selon la revendication 1 ou 2, **caractérisé en ce qu'**il comporte en outre deux organes annulaires d'étanchéité (88), chaque organe annulaire d'étanchéité (88) étant destiné, en service, à être inséré dans une rainure annulaire (84) de l'une des pièces de serrage (70, 72).

4. Dispositif (2) selon la revendication 3, **caractérisé en ce que** lesdits organes annulaires d'étanchéité (88) sont des joints toriques.

5. Dispositif (2) selon l'une quelconque des revendications 1 à 4, **caractérisé en ce que** lesdites pièces de serrage (70, 72) sont réalisées en matière plastique.

6. Dispositif (2) selon l'une quelconque des revendications 1 à 5, **caractérisé en ce que** les moyens de fixation comportent, en outre, une rondelle (66) destinée, en service, à être associée à la tête (64) de la vis (60), et/ou une rondelle (66) destinée, en service, à être associée à l'écrou (62).

7. Dispositif (2) selon l'une quelconque des revendications 1 à 6, **caractérisé en ce que** la (les) pièce(s) de contact (20) est (sont) réalisée(s) en métal.

8. Dispositif (2) selon la revendication 7, **caractérisée en ce que** la (les) pièce(s) de contact (20) est (sont) réalisée (s) en acier et **en ce que** sa (leur) surface est traitée contre la corrosion.

9. Dispositif (2) selon l'une quelconque des revendications 1 à 8, **caractérisée en ce que** le (les) joint(s) d'étanchéité (8) est un (sont des) joint(s) torique(s).

10. Dispositif (2) selon l'une quelconque des revendications 1 à 9, **caractérisé en ce qu'**il comporte en outre des moyens de retenue (42, 44, 48) de chaque joint d'étanchéité (8).

11. Dispositif (2) selon la revendication 10, **caractérisé en ce que** lesdits moyens de retenue (42, 44, 48) dudit joint d'étanchéité (8) comportent une gorge ménagée (42) sur la face périphérique de la pièce de contact (20) correspondante.

12. Dispositif (2) selon la revendication 10, **caractérisé en ce que** lesdits moyens de retenue (42, 44, 48) dudit joint d'étanchéité (8) comportent un insert (44), ledit insert (44) étant destiné, en service, à être interposé entre la face périphérique (30) de la pièce de contact (20) correspondante et la face de support (12) correspondante, et ledit insert (44) étant muni d'une gorge (48).

13. Dispositif (2) selon la revendication 12, **caractérisé en ce que** ledit insert (44) est traversé d'un trou d'insert (46), dimensionné de manière à recevoir, en service, la partie centrale (32) de la pièce de contact (20) correspondante.

14. Dispositif (2) selon la revendication 12 ou 13, **caractérisé en ce que** ledit insert (44) est réalisé en matière plastique.

15. Support (10) électriquement conducteur, comportant deux faces de support (12) électriquement conductrices et sensiblement opposées l'une à l'autre, et ledit support (10) étant traversé d'un trou de support (16) qui débouche sur chacune desdites faces de support (12), **caractérisé en ce qu'**il est muni d'au moins un dispositif de connexion (2) selon l'une quelconque des revendications 1 à 14, de manière à réaliser au moins un point de métallisation sur ledit support (10).

16. Support (10) selon la revendication 15, **caractérisé en ce que** sa (ses) face(s) conductrice(s) (12) comporte(nt) une zone de contact (14) destinée à être au contact de la face centrale (34) d'une pièce de contact (20), et **en ce que** ladite zone de contact (14) est décapée.

17. Aéronef, **caractérisé en ce qu'**il est équipé d'au moins un support (10) selon la revendication 15 ou 16.

## Claims

1. Electrical connection device (2), designed to make a metallisation point on a support (10), said support (10) having two electrically conducting support faces (12) substantially opposite each other, and a support hole (16) passing through said support (10), that opens up on each of said support faces (12), **characterized in that** it comprises:
- two electrically conducting contact parts (20), each with a peripheral part (28) and a central part (32), and each having first and second substantially opposite faces (22, 24),
- means of fastening (36, 60, 62, 64, 66, 70, 72, 76, 78, 80, 82) the device (2) on the support (10), capable of maintaining electrical contact between said conducting support faces (12) and said contact parts (20),
wherein the fastening means comprise:
- a hole (36) in each of the two contact parts (20), passing through it along an axial direction substantially centred with respect to its central part (32) and its peripheral part (28), and
- through fastening means (60, 62, 70, 72) with an axial direction, designed to pass firstly through the hole (36) in one of the contact parts (20), then through the support hole (16), then through the hole (36) in the other contact part (20), when in service,
**characterized in that**:
- each first face (22) of the contact parts (20) comprises a peripheral face (30) corresponding to the peripheral part (28) and a central face (34) corresponding to the central part (32), the peripheral face (30) and the central face (34) being defined by a shoulder (26), and said central face (34) is substantially planar so that, in service, it comes into substantially planar contact with one or other of said support faces (12) and
- the device (2) has two seals (8) which, in service, are respectively intended to be compressed between the peripheral face (30) of one or other of the contact parts (20) and one or other of the support faces (12) and said through fastening means (60, 62, 70, 72) comprise two clamping parts (70, 72), each clamping part (70, 72) comprising a cylindrical part (74) terminating at one end by an end collar (76) and provided with locking means (78, 80) at the other end, said locking means (78, 80) being capable of cooperating to lock said two clamping parts (70, 72) together, and each end collar (76) being designed to bear in contact with the second face (24) of one of the two contact parts (20), when in service,
the cylindrical parts (74) of said clamping parts (70, 72) are hollow and said through fastening means (60, 62, 70, 72) also comprise a screw/nut assembly (60, 62), the screw (60) having a screw stem (52) designed to pass through one and then the other clamping parts (70, 72) when in service, and the screw (60) having a screw head (64) designed to bear in contact with the end collar (76) of one of the clamping parts (70, 72) when in service, and the nut (62) being designed to bear in contact with the end collar (76) of the other clamping part (70, 72) when in service.

2. Device (2) according to claim 1, **characterized in that** the locking means (78, 80) comprise parts (78) projecting from one of the clamping parts and recessed parts (80) in the other clamping part, said projecting parts (78) and said recessed parts (80) being designed to mutually grip, when in service.

3. Device (2) according to claim 1 or 2, **characterized in that** it also comprises two annular sealing members (88), each annular sealing member (88) being designed to be inserted into an annular groove (84) of one of the clamping parts (70, 72), when in service.

4. Device (2) according to claim 3, **characterized in that** said annular sealing members (88) are O-rings.

5. Device (2) according to any of claims 1 to 4, **characterized in that** said clamping parts (70, 72) are made from plastic material.

6. Device (2) according to any one of claims 1 to 5, **characterized in that** the fastening means comprise also a washer (66) designed to be used with the head (64) of the screw (60), when in service and/or a washer (66) designed to be used with the nut (62), when in service.

7. Device (2) according to any one of claims 1 to 6, **characterized in that** the contact part(s) (20) is (are) made from metal.

8. Device (2) according to claim 7, **characterized in that** the contact part(s) (20) is (are) made from steel and **in that** its (their) surface is treated against corrosion.

9. Device (2) according to any one of claims 1 to 8, **characterized in that** the seal(s) (8) is (are) O-rings.

10. Device (2) according to any one of claims 1 to 9, **characterized in that** it also comprises retaining means (42, 44, 48) for each seal (8).

11. Device (2) according to claim 10, **characterized in that** said retaining means (42, 44, 48) for said seal (8) comprise a groove (42) formed on the peripheral face of the corresponding contact part (20).

12. Device (2) according to claim 10, **characterized in that** said retaining means (42, 44, 48) for said seal (8) comprise an insert (44), said insert (44) being designed to be inserted between the peripheral face (30) of the corresponding contact part (20) and the corresponding support face (12), when in service, and said insert (44) being provided with a groove (48).

13. Device (2) according to claim 12, **characterized in that** an insert hole (46) passes through said insert (44), and is sized so as to house the central part (32) of the corresponding contact part (20), when in service.

14. Device (2) according to claim 12 or 13, **characterized in that** said insert (44) is made from plastic material.

15. Electrically conducting support (10), comprising two electrically conducting support faces (12) substantially opposite each other, and a support hole (16) passing through said support (10) that opens up on each of said support faces (12), **characterized in that** it is provided with at least one connection device (2) according to any one of claims 1 to 14, so as to make at least one metallisation point on said support (10),

16. Support (10) according to claim 15, **characterized in that** its conducting face(s) (120 comprise(s) a contact area (14) designed to be in contact with the central face (34) of a contact part (20), and **in that** said contact area (14) is stripped.

17. Aircraft, **characterized in that** it is equipped with at least one support (10) according to claim 15 or 16.

## Patentansprüche

1. Vorrichtung (2) zur elektrischen Verbindung, die dazu bestimmt ist, einen Metallisierungspunkt auf einer Halterung (10) herzustellen, wobei die Halterung (10) zwei elektrisch leitende und im wesentlichen einander gegenüberliegende Halterungsseiten (12) aufweist, und die Halterung (10) von einem Halterungsloch (16) durchsetzt ist, das in jede der Halterungsseiten (12) mündet, umfassend:
- zwei elektrisch leitende Kontaktteile (20), die jeweils einen Umfangsabschnitt (28) und einen zentralen Abschnitt (32) aufweisen und jeweils eine erste und eine zweite Seite (22,24) aufweisen, die im wesentlichen einander entgegengesetzt sind, und
- Befestigungsmittel (36,60,62,64,66,70,72,76,78,80,82) der Vorrichtung (2) an der Halterung (10), die einen elektrischen Kontakt zwischen den leitenden Halterungsseiten (12) und den Kontaktteilen (20) aufrechterhalten können,
wobei die Befestigungsmittel umfassen:
- ein Loch (36) in jedem der zwei Kontaktteile (20), welches dieses in einer Axialrichtung durchsetzt, das im wesentlichen in bezug auf dessen zentralen Abschnitt (32) und in bezug auf dessen Umfangsabschnitt (28) zentriert ist, und
- Durchgangs-Befestigungsmittel (60,62,70,72) mit einer Axialrichtung, die im Betrieb dazu bestimmt sind, der Reihe nach das Loch (36) jedes der Kontaktteile (20), dann das Halterungsloch (16) und dann das Loch (36) des anderen Kontaktteils (20) zu durchsetzen,
**dadurch gekennzeichnet, dass**
- jede erste Seite (22) der Kontaktteile (20) eine Umfangsseite (30) aufweist, die dem Umfangsabschnitt (28) entspricht, sowie eine zentrale Seite (34), die dem zentralen Abschnitt (32) entspricht, wobei die Umfangsseite (30) und die zentrale Seite (34) durch eine Schulter (26) umgrenzt sind und die zentrale Seite (34) im wesentlichen eben ist, so dass sie im Betrieb im wesentlichen in planen Kontakt mit der einen oder der anderen der Halterungsseiten (12) kommt, und
- die Vorrichtung (2) zwei Dichtungen (8) aufweist, die jeweils im Betrieb dazu bestimmt sind, zwischen der Umfangsseite (30) des einen oder anderen Kontaktteils (20) und der einen oder der anderen der Halterungsseiten (12) komprimiert zu werden, und
- die Durchgangs-Befestigungsmittel (60,62,70,72) zwei Festziehteile (70,72) aufweisen, wobei jedes Festziehteil (70,72) einen zylindrischen Abschnitt (74) umfasst, der an einem Ende durch einen Endkragen (76) abschließt und am anderen Ende mit Verriegelungsmitteln (78,80) versehen ist, wobei die Verriegelungsmittel (78,80) zusammenwirken können, um gemeinsam die beiden Festziehteile (70,72) zu verriegeln, und jeder Endkragen (76) im Betrieb dazu bestimmt ist, an der zweiten Seite (24) des einen oder anderen der Kontaktteile (20) zur Anlage zu kommen, und
- die zylindrischen Abschnitte (74) der Festziehteile (70,72) hohl sind und die Durchgangs-Befestigungsmittel (60,62,70,72) außerdem eine Schrauben/Mutter-Einheit (60,62) aufweisen, wobei die Schraube (60) einen Schraubenschaft (52) hat, die im Betrieb dazu bestimmt ist, das eine und dann das andere Festziehteil (70,72) zu durchsetzen, und die Schraube (60) einen Schraubenkopf (64) aufweist, der im Betrieb dazu bestimmt ist, an dem Endkragen (76) des einen der Festziehteile (70,72) anzuliegen, und die Mutter (62) im Betrieb dazu bestimmt ist, an dem Endkragen (76) des anderen der Festziehteile (70,72) anzuliegen.

2. Vorrichtung (2) nach Anspruch 1, **dadurch gekennzeichnet, dass** die Verriegelungsmittel (78,80) vorspringende Abschnitte (78) an einem der Festziehteile sowie hohle Abschnitte (80) am anderen Festziehteil aufweisen, wobei die vorspringenden Abschnitte (78) und die Ausnehmungsabschnitte (80) im Betrieb dazu bestimmt sind, ineinander zu greifen.

3. Vorrichtung (2) nach Anspruch 1 oder 2, **dadurch gekennzeichnet, dass** sie außerdem zwei ringförmige Dichtungselemente (88) aufweist, wobei jedes ringförmige Dichtungselement (88) im Betrieb dazu bestimmt ist, in eine Ringnut (84) des einen der Festziehteile (70,72) eingesetzt zu werden.

4. Vorrichtung (2) nach Anspruch 3, **dadurch gekennzeichnet, dass** die ringförmigen Dichtungselemente (88) torische Dichtungen bzw. Ringdichtungen sind.

5. Vorrichtung (2) nach einem der Ansprüche 1 bis 4, **dadurch gekennzeichnet, dass** die Festziehteile (70,72) aus Kunststoff hergestellt sind.

6. Vorrichtung (2) nach einem der Ansprüche 1 bis 5, **dadurch gekennzeichnet, dass** die Befestigungsmittel außerdem eine Beilagscheibe (66) aufweisen, die im Betrieb dazu bestimmt ist, dem Kopf (64) der Schraube (60) zugeordnet zu werden, und/oder eine Beilagscheibe (66), die im Betrieb dazu bestimmt ist, der Mutter (62) zugeordnet zu werden.

7. Vorrichtung (2) nach einem der Ansprüche 1 bis 6, **dadurch gekennzeichnet, dass** das/die Kontaktteil(e) (20) aus Metall hergestellt ist/sind.

8. Vorrichtung (2) nach Anspruch 7, **dadurch gekennzeichnet, dass** das/die Kontaktteil(e) (20) aus Stahl hergestellt ist/sind, und dass seine/ihre Oberfläche gegen Korrosion behandelt ist.

9. Vorrichtung (2) nach einem der Ansprüche 1 bis 8, **dadurch gekennzeichnet, dass** die Dichtung(en) (8) Ringdichtung(en) ist/sind.

10. Vorrichtung (2) nach einem der Ansprüche 1 bis 9, **dadurch gekennzeichnet, dass** sie außerdem Festhaltemittel (42,44,48) jeder Dichtung (8) umfassen.

11. Vorrichtung (2) nach Anspruch 10, **dadurch gekennzeichnet, dass** die Festhaltemittel (42,44,48) der Dichtung (8) eine in die Umfangsfläche des entsprechenden Kontaktteils (20) eingebrachte Kehlung (42) aufweisen.

12. Vorrichtung (2) nach Anspruch 10, **dadurch gekennzeichnet, dass** die Festhaltemittel (42,44,48) der Dichtung (8) einen Einsatz (44) umfassen, wobei der Einsatz (44) im Betrieb dazu bestimmt ist, zwischen die Umfangsfläche (30) des entsprechenden Kontaktteils (20) und die entsprechende Halterungsfläche (12) eingesetzt zu werden, und der Einsatz (44) mit einer Kehlung (48) versehen ist.

13. Vorrichtung (2) nach Anspruch 12, **dadurch gekennzeichnet, dass** der Einsatz (44) von einem Einsatzloch (46) durchsetzt ist, das so dimensioniert ist, dass es im Betrieb den zentralen Abschnitt (32) des entsprechenden Kontaktteils (20) aufnimmt.

14. Vorrichtung (2) nach Anspruch 12 oder 13, **dadurch gekennzeichnet, dass** der Einsatz (44) aus Kunststoff hergestellt ist.

15. Elektrisch leitende Halterung (10) mit zwei elektrisch leitenden und einander im wesentlichen gegenüberliegenden Halterungsflächen (12), wobei die Halterung (10) von einem Halterungsloch (16) durchsetzt ist, das in jede der Halterungsflächen (12) mündet, **dadurch gekennzeichnet, dass** sie mit mindestens einer Verbindungsvorrichtung (2) gemäß einem der Ansprüche 1 bis 14 versehen ist, so dass mindestens ein Metallisierungspunkt auf der Halterung (10) hergestellt wird.

16. Halterung (10) nach Anspruch 15, **dadurch gekennzeichnet, dass** ihre leitende(n) Fläche(n) (12) eine Kontaktzone (14) aufweist/aufweisen, die dazu bestimmt ist, mit der zentralen Fläche (34) eines Kontaktteils (20) in Kontakt zu sein, und dass die Kontaktzone (14) geätzt ist.

17. Luftfahrzeug, **dadurch gekennzeichnet, dass** es mit mindestens einer Halterung (10) gemäß Anspruch 15 oder 16 ausgestattet ist.
